# EUROPEAN PATENT APPLICATION

(11) **EP 3 456 610 A1**
(43) Date of publication of application: **20.03.2019**
(21) Application number: 18184044.8
(22) Date of filing: 17.07.2018
(51) Int. Cl.: B62D 21/15, F15B 15/19

(54) **LOAD TRANSMISSION STRUCTURE**

(30) Priority: 13.09.2017 JP 2017175986
(71) Applicant: TOYOTA JIDOSHA KABUSHIKI KAISHA, Toyota-shi, Aichi-ken, 471-8571 (JP)
(72) Inventor: SAITO, Naohiro, Aichi-ken, 471-8571 (JP); TAKAYANAGI, Junichi, Aichi-ken, 471-8571 (JP)
(74) Representative: J A Kemp

(57) **Abstract**

A load transmission structure includes: a rocker panel (18) disposed to extend in a vehicle front-and-rear direction at an end portion in a width direction of a vehicle; an extension device (24) provided with an extending member (34) disposed at a position facing a wheel (20) at an end portion (18A) of the rocker panel (18) in the vehicle front-and-rear direction, the extension device (24) being configured to operate to extend the extending member (34) toward the wheel (20) from the rocker panel (18); and a controller (36) configured to operate the extension device (24) when a collision of the vehicle (10) is detected or predicted. The extending member (34) is configured to include a metallic rod having an axial direction in the vehicle front-and-rear direction.

## Description

### 1. Field of the Invention

The invention relates to a load transmission structure.

### 2. Description of Related Art

Japanese Unexamined Patent Application Publication No. 2008-195261 (JP 2008-195261 A) discloses a structure in which a front airbag is provided at a rear portion of a bumper reinforcement and a rear airbag is provided at a front portion of a side sill (a rocker panel). In JP 2008-195261 A, a technique of allowing a collision load input to the bumper reinforcement to be escaped to the rocker panel by eliminating gaps in the front and rear of a tire by inflating and deploying the front airbag and the rear airbag at the time of a frontal collision of a vehicle is described. On the other hand, in Japanese Unexamined Patent Application Publication No. 2011-068313 (JP 2011-068313 A), a structure in which a plurality of airbags is accommodated in a tire house is disclosed, and a technique of eliminating a gap between the tire house and a tire by bringing the airbags into pressure contact with the tire by inflating and deploying the airbags at the time of a collision of a vehicle is described.

### SUMMARY OF THE INVENTION

In the structures disclosed in JP 2008-195261 A and JP 2011-068313 A, it is possible to absorb a part of the collision load by the airbags. On the other hand, the outer circumferential surface of the tire (wheel) is covered over a wide range with the airbags, and therefore, there is room for improvement from the viewpoint of effectively transmitting the load to the rocker panel that is a vehicle frame member.

The invention provides a load transmission structure capable of effectively transmitting a collision load input to a wheel to a rocker panel.

A first aspect of the invention relates to a load transmission structure including a rocker panel, an extension device, and a controller. The rocker panel is disposed to extend in a vehicle front-and-rear direction at an end portion of the vehicle in a width direction of the vehicle. The extension device is provided with an extending member disposed at an end portion of the rocker panel in the vehicle front-and-rear direction. The end portion of the rocker faces the wheel. The extension device is configured to operate to extend the extending member toward the wheel from the rocker panel. The controller is configured to operate the extension device when a collision of the vehicle is detected or predicted. The extending member is configured to include a metallic rod having an axis which extends in the vehicle front-and-rear direction.

In the load transmission structure according to the first aspect of the invention, the rocker panel extends in the vehicle front-and-rear direction at an end portion of the vehicle in the width direction of the vehicle, and the extension device is provided at an end portion of the rocker panel in the vehicle front-and-rear direction. The extension device is provided with the extending member disposed at an end portion of the rocker panel facing the wheel and operates when a collision of the vehicle is detected or predicted, so that the extending member is extended toward the wheel from the rocker panel. In this way, the extending member is extended to the wheel at the time of a collision of the vehicle, whereby it is possible to make the gap between the wheel and the rocker panel smaller and to quickly transmit a collision load input to the wheel to the rocker panel through the extending member.

The extending member is configured to include a metallic rod having an axis which extends in the vehicle front-and-rear direction. In this way, it is possible to directly transmit the collision load to the rocker panel through the rod, compared to a configuration of transmitting a load through a bag-like member such as an airbag.

In the load transmission structure according to the first aspect of the invention, the extension device may have a load input portion disposed at a tip portion of the extending member when the extending member is in an extended state. The load input portion may have a thickness in the vehicle front-and-rear direction and have a diameter larger than a diameter of the tip portion of the extending member. The load input portion may be made of a metal.

In the load transmission structure according to the first aspect of the invention, the extension device may have an impact absorbing member mounted on a front face of the load input portion in the vehicle front-and-rear direction.

In the load transmission structure according to the first aspect of the invention, the extending member may have a base end portion connected to the rocker panel. The base end portion may be located inside an outer shape of the rocker panel when viewed in the vehicle front-and-rear direction when the extending member is in an extended state.

In the load transmission structure according to the first aspect of the invention, the extension device may be configured to include a case, a cover, and an actuator. The case may be mounted on a front face of the end portion of the rocker panel in the vehicle front-and-rear direction. The case may have an opening portion on a front side of the case. The cover may be disposed to close the opening portion of the case and slide with respect to the case. The actuator may be composed of the extending member and a main body part. The actuator may be accommodated in the case such that the actuator operates to extend the extending member and the extending member pushes the cover toward the wheel to slide the cover with respect to the case.

A second aspect of the invention relates to a load transmission structure including a rocker panel, an extension device, and a controller. The rocker panel is disposed to extend in a vehicle front-and-rear direction at an end portion of the vehicle in a width direction of the vehicle. The extension device is provided with an extending member disposed at an end portion of the rocker panel in the vehicle front-and-rear direction. The end portion of the rocker panel faces a wheel. The extension device has a first end portion disposed within the rocker panel and a second end portion extending in the vehicle front-and-rear direction. The extension device is configured to operate to extend the extending member toward the wheel from the rocker panel. The controller is configured to operate the extension device when a collision of the vehicle is detected or predicted.

In the load transmission structure according to the second aspect of the invention, the rocker panel extends in the vehicle front-and-rear direction at an end portion of the vehicle in the width direction of the vehicle, and the extension device is provided at an end portion of the rocker panel in the vehicle front-and-rear direction. The extension device is provided with the extending member disposed at the end portion of the rocker panel, which faces the wheel and operates when a collision of the vehicle is detected or predicted, so that the extending member is extended toward the wheel from the rocker panel. In this way, the extending member is extended to the wheel at the time of a collision of the vehicle, whereby it is possible to make the gap between the wheel and the rocker panel smaller and to quickly transmit a collision load input to the wheel to the rocker panel through the extending member.

The first end portion of the extending member is disposed within the rocker panel, and the second end portion of the extending member is made to be capable of extending in the vehicle front-and-rear direction. In this way, even in a case where a collision load is transmitted from the wheel to the extending member and a force in a shearing direction acts on the extending member, one end side of the extending member comes into contact with a wall surface of the rocker panel, whereby it is possible to further suppress the buckling of the extending member.

In the load transmission structure according to the second aspect of the invention, the extending member may be configured to include a metallic rod accommodated in the rocker panel in a state before the metallic rod is extended, and the rod may be extended in the vehicle front-and-rear direction by an operation of the extension device.

In the load transmission structure according to the second aspect of the invention, the metallic rod is accommodated in the rocker panel in a state before the metallic rod is extended, and therefore, it is possible to further suppress a decrease in a design characteristic. It is possible to directly transmit the collision load input to the wheel to the rocker panel through the rod.

In the load transmission structure according to the second aspect of the invention, the extending member may be a metallic bellows member folded and accommodated in the rocker panel in a state before the metallic bellows member is extended, and the extension device may operate to supply gas to an interior of the bellows member and extend the bellows member in the vehicle front-and-rear direction.

In the load transmission structure according to the second aspect of the invention, the metallic bellows member is accommodated in the cross section of the rocker panel in a state before being extended, and therefore, it is possible to further suppress a decrease in a design characteristic. The bellows member can be accommodated in a folded state, and therefore, a space for accommodation is not increased.

In the load transmission structure according to the second aspect of the invention, the extension device may have a load input portion disposed at a tip portion of the extending member when the extension device is in an extended state. The load input portion may have a thickness in the vehicle front-and-rear direction and have a diameter larger than a diameter of the tip portion of the extending member. The load input portion may be made of a metal.

In the load transmission structure according to the second aspect of the invention, the wheel can be received by the load input portion, and therefore, even in a case where the wheel has a certain angle (steering angle), it is possible to effectively transmit the collision load to the rocker panel.

In the load transmission structure according to the second aspect of the invention, the extension device may have an impact absorbing member mounted on a front face of the load input portion in the vehicle front-and-rear direction.

In the load transmission structure according to the second aspect of the invention, the extending member may have a base end portion connected to the rocker panel, and the base end portion may be located inside an outer shape of the rocker panel when viewed in the vehicle front-and-rear direction when the extending member is in an extended state.

In the load transmission structure according to the second aspect of the invention, the base end portion of the extending member in an extended state is located inside an outer shape of the vehicle rocker panel when viewed in the vehicle front-and-rear direction, and therefore, it is possible to further restrain the collision load transmitted to the extending member from being transmitted to peripheral components other than the rocker panel.

As described above, according to the first aspect of the invention, it is possible to effectively transmit the collision load input to the wheel to the rocker panel.

According to the second aspect of the invention, it is possible to effectively transmit the collision load input to the wheel to the rocker panel and to further suppress the buckling of the extending member.

According to the second aspect of the invention, further, it is possible to directly transmit the collision load to the rocker panel while further suppressing a decrease in a design characteristic.

According to the second aspect of the invention, further, it is possible to save space while further suppressing a decrease in a design characteristic.

According to the second aspect of the invention, further, even in a case where the wheel has an angle, it is possible to effectively transmit the collision load to the rocker panel.

According to the second aspect of the invention, further, it is possible to reliably transmit the collision load input to the wheel to the rocker panel.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic side view schematically showing a front portion of a vehicle on which a load transmission structure according to a first embodiment is mounted;
FIG. 2A is a sectional side view showing the load transmission structure according to the first embodiment and is a diagram showing a state before extension;
FIG. 2B is a sectional side view showing the load transmission structure according to the first embodiment and is a diagram showing a state at the time of extension;
FIG. 3 is a schematic side view schematically showing the front portion of the vehicle on which the load transmission structure according to the first embodiment is mounted, and is a diagram showing the state of the vehicle at the time of a collision;
FIG. 4A is a sectional side view showing a modification example of the load transmission structure according to the first embodiment and is a diagram showing a state before extension;
FIG. 4B is a sectional side view showing the modification example of the load transmission structure according to the first embodiment and is a diagram showing a state at the time of extension;
FIG. 5 is a schematic side view schematically showing a front portion of a vehicle on which a load transmission structure according to a second embodiment is mounted;
FIG. 6A is a sectional side view showing the load transmission structure according to the second embodiment and is a diagram showing a state before extension;
FIG. 6B is a sectional side view showing the load transmission structure according to the second embodiment and is a diagram showing a state at the time of extension;
FIG. 7A is a sectional side view showing a load transmission structure according to a third embodiment and is a diagram showing a state before extension;
FIG. 7B is a sectional side view showing the load transmission structure according to the third embodiment and is a diagram showing a state at the time of extension;
FIG. 8A is a sectional side view showing a load transmission structure according to a fourth embodiment and is a diagram showing a state before extension; and
FIG. 8B is a sectional side view showing the load transmission structure according to the fourth embodiment and is a diagram showing a state at the time of extension.

### DETAILED DESCRIPTION OF EMBODIMENTS

### First Embodiment

A load transmission structure according to a first embodiment will be described with reference to the drawings. An arrow FR and an arrow UP shown in each drawing respectively indicate a forward direction and an upward direction of a vehicle. Hereinafter, in a case of performing description simply using a front-and-rear direction, an up-and-down direction, and a right-and-left direction, unless otherwise specified, the directions shall indicate the front and rear in a vehicle front-and-rear direction, the up and down in a vehicle up-and-down direction, and the right and left in a vehicle width direction in a case of facing a traveling direction.

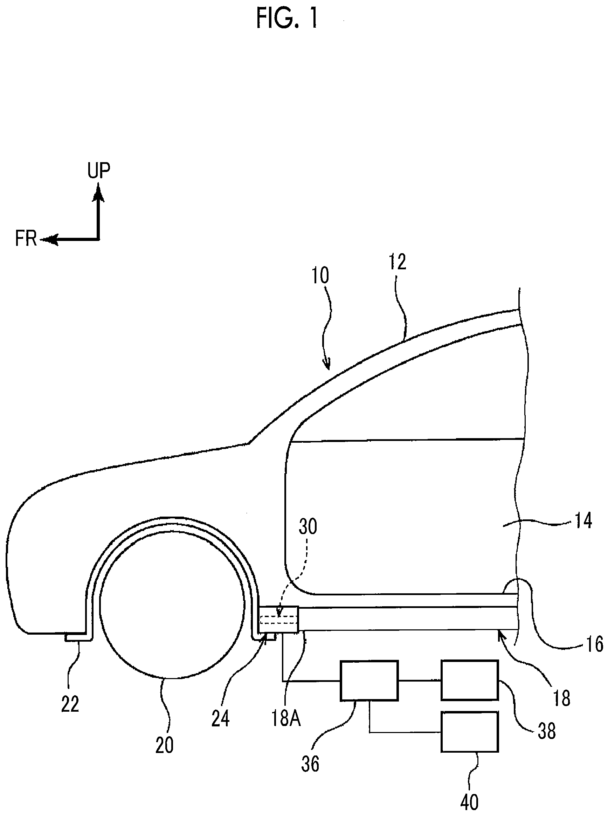

As shown in FIG. 1, front pillars 12 extending along the vehicle up-and-down direction at both end portions in the width direction of a vehicle are provided at a front portion of a vehicle 10 adopting the load transmission structure according to the first embodiment. The front pillar 12 is a vehicle frame member that has a closed cross-sectional shape and configures a front edge and an upper edge of an opening portion 16 for a side door 14, and an upper end portion of the front pillar 12 is connected to a roof side rail (not shown). A lower end portion of the front pillar 12 is connected to a front end portion 18A of a rocker panel 18.

The rocker panel 18 extends in the vehicle front-and-rear direction at an end portion in the width direction of the vehicle, and a pair of right and left rocker panels 18 is provided (in FIG. 1, solely the rocker panel 18 on the left side of the vehicle is shown). The rocker panel 18 is a vehicle frame member having a closed cross-sectional shape and located at a lower portion of the vehicle, and configures a lower edge of the opening portion 16. A front wheel 20 as a vehicle wheel is disposed in front of the rocker panel 18 with a gap therebetween. A fender liner 22 made of resin is mounted around the front wheel 20.

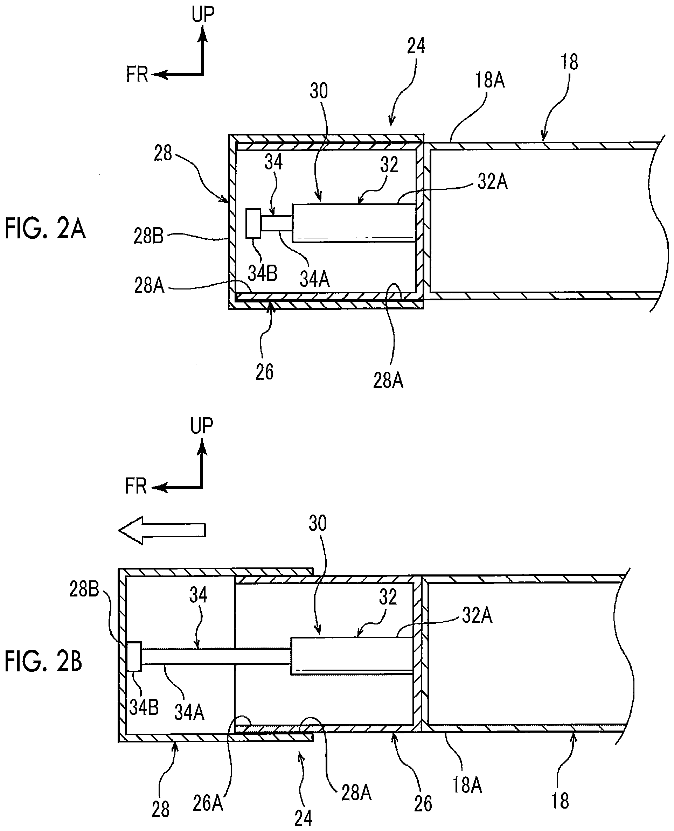

An extension device 24 is disposed at a position facing the front wheel 20 in the vehicle front-and-rear direction at the front end portion 18A of the rocker panel 18. As shown in FIG. 2A, the extension device 24 is configured to include a case 26, a cover 28, and an actuator 30.

The case 26 is a metal member mounted on the front face of the front end portion 18A of the rocker panel 18. The case 26 is formed in a substantially rectangular tube shape such that the front side of the case is open and the rear side of the case is closed. An opening portion 26A on the front end side of the case 26 is closed by the cover 28.

The cover 28 is a substantially rectangular tubular metal member having an opening portion 28A on a rear side of the cover. A front end portion of the cover 28 is configured with a load input portion 28B having a thickness direction in the vehicle front-and-rear direction. The cover 28 is formed slightly larger than the case 26 and is fitted onto the outside of the case 26. The cover 28 is mounted on the case 26 in a simplified manner and has a structure in which a force on the vehicle front side is input to the cover 28, whereby the cover 28 slides with respect to the case 26.

The actuator 30 is accommodated in the interior of the case 26. The actuator 30 is configured to include a main body part 32 and a metallic rod 34 as an extending member. The main body part 32 is a substantially cylindrical member having an axial direction in the vehicle front-and-rear direction, and a rear end portion thereof is fixed to a bottom portion of the case 26. A micro gas generator (MGG) (not shown) is provided in the interior of the main body part 32, and a structure in which the micro gas generator operates, whereby gas is generated in the interior of the main body part 32, is made.

The rod 34 is a bar-shaped metal member having an axial direction in the vehicle front-and-rear direction and is provided with a shaft body 34A slidably inserted in the main body part 32. A pressing portion 34B having a diameter larger than the diameter of the shaft body 34A is provided at a tip portion of the shaft body 34A, and a gap is provided between the pressing portion 34B and the cover 28.

As shown in FIG. 2B, the micro gas generator of the main body part 32 operates to generate gas, whereby the rod 34 is extended toward the vehicle front side, and the pressing portion 34B of the rod 34 comes into contact with the load input portion 28B of the cover 28 and presses the cover 28 to move it toward the vehicle front side. That is, the extension device 24 is configured to extend the rod 34 towards the front wheel 20 by being operated. The base end side of the rod 34 in the extended state is configured so as to be located inside the outer shape of the rocker panel 18 when viewed in the vehicle front-and-rear direction. In the first embodiment, the base end side of the rod 34 is connected to the main body part 32, and a rear end portion 32A (a base end portion in the extending member), which is a connection portion with the rocker panel 18 in the main body part 32, is located inside the outer shape of the rocker panel 18 when viewed in the vehicle front-and-rear direction. In the extended state, the load input portion 28B, which is larger than the pressing portion 34B, is (disposed) in contact with the pressing portion 34B that is the tip portion of the rod 34. An expression "large" as referred to herein means that the diameter of the load input portion 28B is larger than the diameter of the tip portion (the pressing portion 34B) of the rod 34 when viewed from the vehicle front-and-rear direction.

As shown in FIG. 1, the extension device 24 is electrically connected to an electronic control unit (ECU) 36 as a controller and is operated based on the signal from the ECU 36. The ECU 36 is electrically connected to a collision prediction sensor 38 and a collision sensor 40 (or a sensor group). The ECU 36 is configured so as to operate the extension device 24, based on the signal from at least one of the collision prediction sensor 38 and the collision sensor 40. As the collision prediction sensor 38, a millimeter wave radar, a stereo camera, an infrared laser, or the like capable of monitoring the front and sides of the vehicle can be applied, and they may be combined.

In the first embodiment, as an example, the extension device 24 is operated based on the signal from the collision prediction sensor 38. In this case, when a frontal collision is predicted by the collision prediction sensor 38, the ECU 36 determines whether or not the frontal collision is inevitable, based on the signal from the collision prediction sensor 38. In a case where a determination that the frontal collision is inevitable is made, the actuator 30 of the extension device 24 is operated by the ECU 36.

As another example, the extension device 24 may be operated based on the signal from the collision sensor 40. In this case, when a frontal collision is detected by the collision sensor 40, the ECU 36 operates the actuator 30 of the extension device 24, based on the signal from the collision sensor 40.

### Operation and Effects

The operation and effects of the first embodiment will be described.

In the load transmission structure of the first embodiment, a frontal collision is predicted by the collision prediction sensor 38, and in a case where a determination that the frontal collision is inevitable is made, the extension device 24 is operated by the ECU 36. Specifically, the actuator 30 of the extension device 24 is operated, and thus the rod 34 is extended from the rocker panel 18 to the vehicle front side toward the front wheel 20 (refer to FIG. 2B).

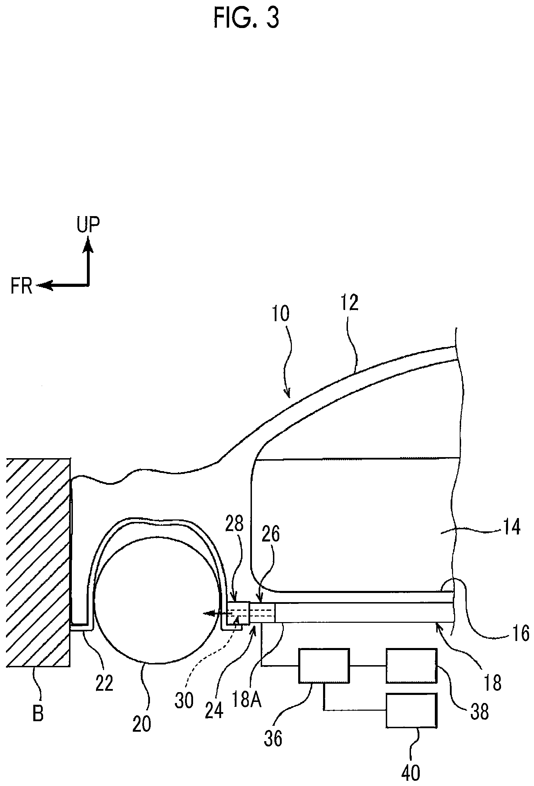

In this way, as shown in FIG. 3, the cover 28 of the extension device 24 is pressed against the rod 34 and moves toward the front wheel 20 while deforming the fender liner 22, thereby coming into contact with the front wheel 20. In this way, it is possible to eliminate the gap between the front wheel 20 and the rocker panel 18 or to further reduce the gap.

In particular, as shown in FIG. 3, in the case of a collision type such as a small overlap collision in which a barrier B collides with further the outside in the vehicle width direction than a front side member (not shown), it is conceivable that a collision load from the barrier B is input to the front wheel 20 and the front wheel 20 moves toward the rear side of the vehicle. At this time, the gap between the front wheel 20 and the rocker panel 18 is eliminated or further reduced by the extension device 24, as in the first embodiment, whereby it is possible to quickly transmit the collision load input to the front wheel 20 to the rocker panel 18 through the case 26 and the rod 34. As a result, it is possible to further suppress the collision of the front wheel 20 with a dash panel or the like.

In the first embodiment, the metallic rod 34 is used as the extending member, and the base end side of the rod 34 (the rear end portion 32A of the main body part 32) is located inside the outer shape of the vehicle rocker panel when viewed in the vehicle front-and-rear direction. In this way, it is possible to further restrain the collision load transmitted to the rod 34 from being transmitted to peripheral components other than the rocker panel 18. As a result, it is possible to effectively transmit the collision load to the rocker panel 18, compared to a configuration of transmitting a load through a bag-like member such as an airbag.

In the first embodiment, the load input portion 28B is in contact with the tip portion of the rod 34 in the extended state of the rod 34, and therefore, the front wheel 20 can be received by the load input portion 28B. In this way, even in a case where the front wheel 20 has a certain angle (steering angle), it is possible to effectively transmit the collision load to the rocker panel 18.

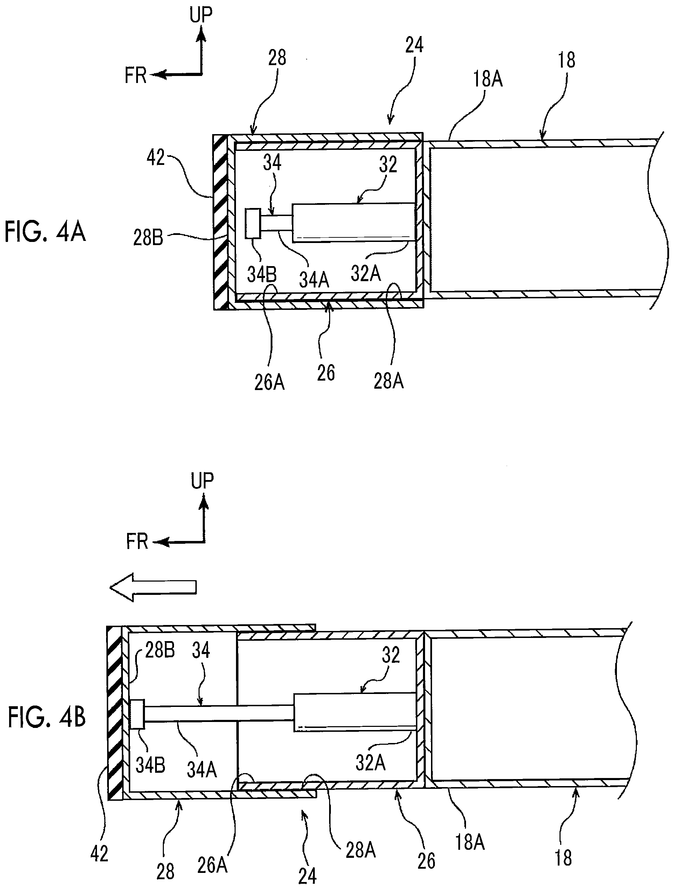

The load transmission structure of the first embodiment may be configured like a modification example shown in FIG. 4A and FIG. 4B, for example.

### Modification Example

As shown in FIG. 4A, in a load transmission structure according to a modification example, an impact absorbing member 42 is mounted on the front face of the load input portion 28B in the cover 28 of the extension device 24. The impact absorbing member 42 is a flat plate-shaped elastic body formed in the same shape as the load input portion 28B and has a structure in which the impact absorbing member 42 is elastically deformed in the vehicle front-and-rear direction, thereby absorbing an impact.

As shown in FIG. 4B, when the actuator 30 is operated, the rod 34 is extended toward the vehicle front side to press the cover 28. At this time, the impact absorbing member 42 mounted on the load input portion 28B of the cover 28 also moves toward the vehicle front side.

In the load transmission structure of this modification example, in a case where a collision load is input from the front wheel 20 to the extension device 24 in a state where the rod 34 is extended at the time of a frontal collision, a part of the input collision load can be absorbed by the impact absorbing member 42.

### Second Embodiment

A load transmission structure according to a second embodiment will be described with reference to the drawings. The same structures as those in the first embodiment are denoted by the same reference numerals, and the description thereof is appropriately omitted.

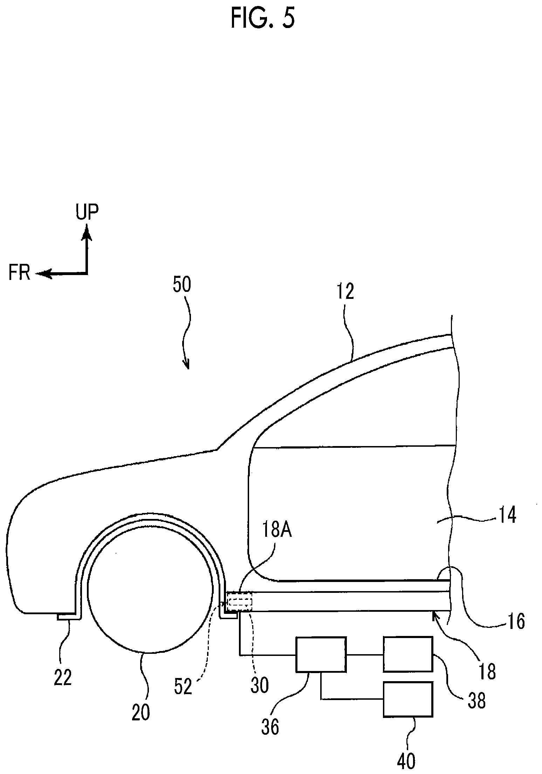

As shown in FIG. 5, the load transmission structure of the second embodiment is different from that of the first embodiment in that an extension device 52 is provided in the interior of the rocker panel 18. That is, in a vehicle 50 adopting the load transmission structure of the second embodiment, the rocker panel 18 further extends to the front of the vehicle than in the first embodiment, and the extension device 52 is disposed at a position facing the front wheel 20 in the vehicle front-and-rear direction within the closed cross section of the front end portion 18A of the rocker panel 18.

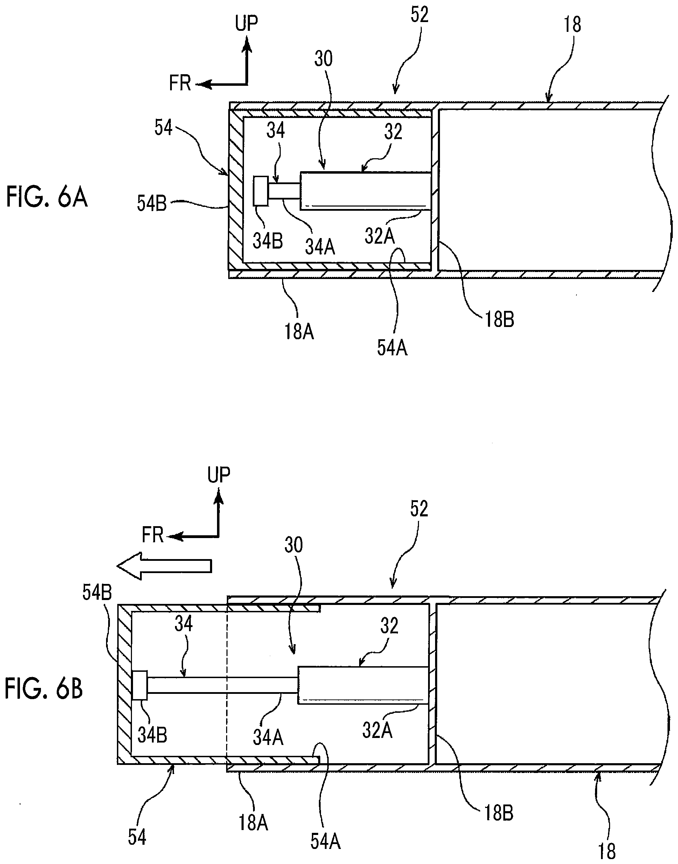

As shown in FIG. 6A, the extension device 52 is configured to include the actuator 30 and a cover 54.

The actuator 30 is disposed within the closed cross section of the rocker panel 18 and is configured to include the main body part 32 and the metallic rod 34 as an extending member. The main body part 32 is a substantially cylindrical member having an axial direction in the vehicle front-and-rear direction, and a rear end portion thereof is fixed to a base portion 18B bridged between the inner walls of the rocker panel 18. The base portion 18B is provided at a position offset toward the rear side of the vehicle from the front end portion 18A of the rocker panel 18, and the space in the cross section of the rocker panel 18 is partitioned back and forth by the base portion 18B.

A micro gas generator (MGG) (not shown) is provided in the interior of the main body part 32, and a structure in which the micro gas generator operates, whereby gas is generated in the interior of the main body part 32, is made.

The rod 34 is a bar-shaped metal member having an axial direction in the vehicle front-and-rear direction and is provided with the shaft body 34A slidably inserted in the main body part 32. The base end side (a first end portion) of the rod 34 is disposed within the cross section of the rocker panel 18, and the tip portion (a second end portion) of the rod 34 is made to be capable of extending in the vehicle front-and-rear direction. The tip portion of the shaft body 34A is regarded as the pressing portion 34B having a larger diameter than the shaft body 34A.

In the second embodiment, the front side of the rocker panel 18 is open, and the front side of the rocker panel 18 is closed by the cover 54. The cover 54 is a substantially rectangular tubular metal member having an opening portion 54A on a rear side of the cover. A front end portion of the cover 54 is configured with a load input portion 54B having a thickness direction in the vehicle front-and-rear direction. The cover 54 is formed slightly smaller than the rocker panel 18 and is inserted into the front end portion 18A of the rocker panel 18. The cover 54 is mounted on the rocker panel 18 in a simplified manner and has a structure in which a force on the vehicle front side is input to the cover 54, whereby the cover 54 slides with respect to the rocker panel 18. In a state before extension, a gap is provided between the pressing portion 34B of the rod 34 and the cover 54.

As shown in FIG. 6B, the micro gas generator of the main body part 32 operates to generate gas, whereby the rod 34 is extended toward the vehicle front side, and the pressing portion 34B of the rod 34 comes into contact with the cover 54 and presses the cover 54 to move it toward the vehicle front side. That is, the extension device 52 is configured so as to extend the rod 34 towards the front wheel 20 by being operated. At this time, the base end side (the first end portion) of the rod 34 is maintained in a state of being disposed within the cross section of the rocker panel 18.

In the extended state, the base end side of the rod 34 is configured so as to be located inside the outer shape of the rocker panel 18 when viewed in the vehicle front-and-rear direction. In the second embodiment, the base end side of the rod 34 is connected to the main body part 32, and the rear end portion 32A (a base end portion in the extending member), which is a connection portion with the rocker panel 18 in the main body part 32, is located inside the outer shape of the rocker panel 18 when viewed in the vehicle front-and-rear direction. In the extended state, the load input portion 54B, which is larger than the pressing portion 34B, is (disposed) in contact with the pressing portion 34B that is the tip portion of the rod 34. An expression "large" as referred to herein means that the diameter of the load input portion 54B is larger than the diameter of the tip portion (the pressing portion 34B) of the rod 34 when viewed from the vehicle front-and-rear direction.

### Operation and Effects

The operation and effects of the second embodiment will be described.

In the load transmission structure of the second embodiment, the first end portion of the rod 34 is disposed within the cross section of the rocker panel 18. Therefore, when a collision load is transmitted from the front wheel 20 to the rod 34, even in a case where a component force in a shearing direction (the vehicle up-and-down direction or the vehicle width direction) acts on the rod 34, one end side of the rod 34 comes into contact with the wall surface of the rocker panel 18, whereby it is possible to further suppress the buckling of the rod 34. In this way, it is possible to effectively transmit the collision load input to the front wheel 20 to the rocker panel 18. The other operations are the same as those in the first embodiment.

### Third Embodiment

A load transmission structure according to a third embodiment will be described with reference to the drawings. The same structures as those in the first embodiment or the second embodiment are denoted by the same reference numerals, and the description thereof is appropriately omitted.

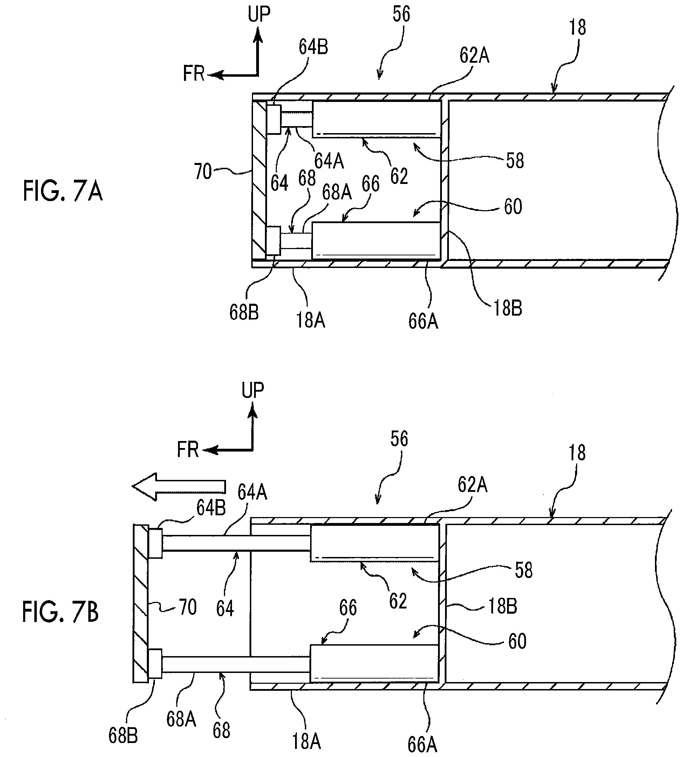

As shown in FIG. 7A, in the load transmission structure of the third embodiment, an extension device 56 is disposed at a position facing the front wheel (refer to FIG. 1) in the vehicle front-and-rear direction within the closed cross section of the front end portion 18A of the rocker panel 18.

The extension device 56 is configured to include a first actuator 58, a second actuator 60, and a load input portion 70.

The first actuator 58 is disposed within the closed cross section of the rocker panel 18 and is configured to include a main body part 62 and a metallic rod 64 as an extending member. The main body part 62 is a substantially cylindrical member having an axial direction in the vehicle front-and-rear direction, and a rear end portion thereof is fixed to the base portion 18B of the rocker panel 18. An upper end portion of the main body part 62 is fixed to an upper wall of the rocker panel 18.

A micro gas generator (MGG) (not shown) is provided in the interior of the main body part 62, and a structure in which the micro gas generator operates, whereby gas is generated in the interior of the main body part 62, is made.

The rod 64 is a bar-shaped metal member having an axial direction in the vehicle front-and-rear direction and is provided with a shaft body 64A slidably inserted in the main body part 62. The base end side (a first end portion) of the rod 64 is disposed within the cross section of the rocker panel 18, and the tip portion (a second end portion) of the rod 64 is made to be capable of extending in the vehicle front-and-rear direction. The tip portion of the shaft body 64A is regarded as a pressing portion 64B having a larger diameter than the shaft body 64A.

On the other hand, the second actuator 60 is disposed within the closed cross section of the rocker panel 18 and is configured to include a main body part 66 and a metallic rod 68 as an extending member. The main body part 66 is a substantially cylindrical member having an axial direction in the vehicle front-and-rear direction, and a rear end portion thereof is fixed to the base portion 18B of the rocker panel 18. A lower end portion of the main body part 66 is fixed to a lower wall of the rocker panel 18.

A micro gas generator (MGG) (not shown) is provided in the interior of the main body part 66, and a structure in which the micro gas generator operates, whereby gas is generated in the interior of the main body part 66, is made.

The rod 68 is a bar-shaped metal member having an axial direction in the vehicle front-and-rear direction and is provided with a shaft body 68A slidably inserted in the main body part 66. The base end side (a first end portion) of the rod 68 is disposed within the cross section of the rocker panel 18, and the tip portion (a second end portion) of the rod 68 is made to be capable of extending in the vehicle front-and-rear direction. The tip portion of the shaft body 68A is regarded as a pressing portion 68B having a larger diameter than the shaft body 68A.

The load input portion 70 is fixed to the front faces of the pressing portion 64B of the rod 64 and the pressing portion 68B of the rod 68. The load input portion 70 is a substantially flat plate-shaped metal member having a thickness direction in the vehicle front-and-rear direction and is formed slightly smaller than the rocker panel 18. The load input portion 70 is inserted into the front end portion 18A of the rocker panel 18. That is, the load input portion 70 also functions as a cover for closing an opening portion of the rocker panel 18.

The extension device 56 configured as described above is electrically connected to the ECU 36 (refer to FIG. 1), similar to the first embodiment. The first actuator 58 and the second actuator 60 are operated substantially at the same time, based on the signal from the ECU 36.

As shown in FIG. 7B, the micro gas generator of the main body part 62 of the first actuator 58 and the micro gas generator of the main body part 66 of the second actuator 60 are operated to generate gas, whereby the rod 64 and the rod 68 are extended toward the vehicle front side. In this way, the load input portion 70 is moved toward the vehicle front side. At this time, the base end side (a first end portion) of the rod 64 and the base end side (a first end portion) of the rod 68 are maintained in the state of being disposed within the cross section of the rocker panel 18.

In the extended state, the base end side of the rod 64 and the base end side of the rod 68 are configured so as to be located inside the outer shape of the rocker panel 18 when viewed in the vehicle front-and-rear direction. In the third embodiment, the base end side of the rod 64 is connected to the main body part 62, and a rear end portion 62A (a base end portion in the extending member), which is a connection portion with the base portion 18B of the rocker panel 18 in the main body part 62, is located inside the outer shape of the rocker panel 18 when viewed in the vehicle front-and-rear direction. Similarly, the base end side of the rod 68 is connected to the main body part 66, and a rear end portion 66A (a base end portion in the extending member), which is a connection portion with the base portion 18B of the rocker panel 18 in the main body part 66, is located inside the outer shape of the rocker panel 18 when viewed in the vehicle front-and-rear direction.

### Operation and Effects

The operation and effects of the third embodiment will be described.

In the load transmission structure of the third embodiment, the first actuator 58 and the second actuator 60 are provided, and therefore, the rod 64 and the rod 68 can be stably extended toward the front of the vehicle, compared to a configuration having solely one actuator.

In the third embodiment, the load input portion 70 is directly fixed to the rod 64 and the rod 68, and therefore, the load input portion 70 can be smoothly moved toward the vehicle front side. In the third embodiment, the first actuator 58 is fixed to the base portion 18B and the upper wall of the rocker panel 18 and the second actuator 60 is fixed to the base portion 18B and the lower wall of the rocker panel 18. Therefore, it is easy to transmit a reaction force acting during an operation to the rocker panel 18. The other operations are the same as those in the other embodiments.

When the first actuator 58 is fixed solely to the upper wall of the rocker panel 18 and the second actuator 60 is fixed solely to the lower wall of the rocker panel 18, the base portion 18B may not be provided.

### Fourth Embodiment

A load transmission structure according to a fourth embodiment will be described with reference to the drawings. The same structures as those in the first to third embodiments are denoted by the same reference numerals, and the description thereof is appropriately omitted.

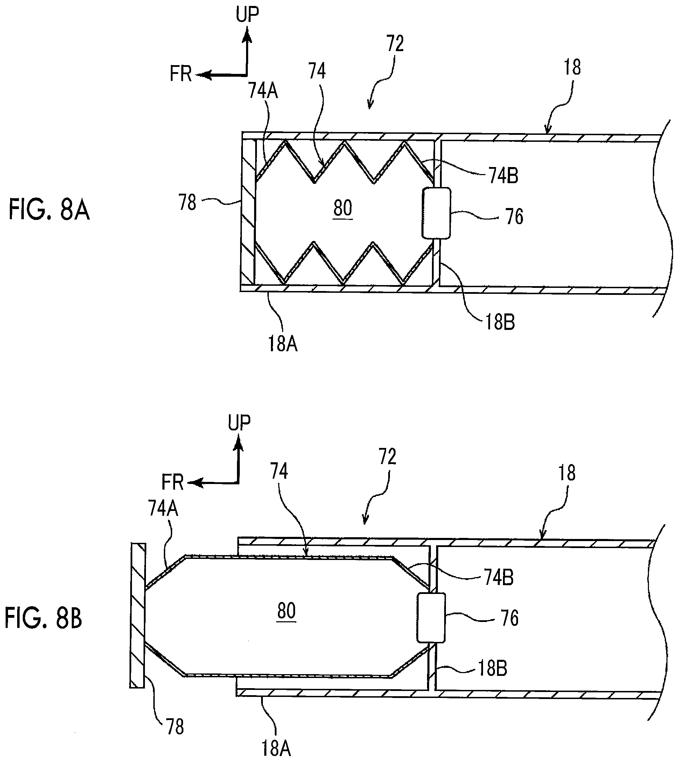

As shown in FIG. 8A, the load transmission structure of the fourth embodiment is different from those of the first to third embodiments in that an extension device 72 is configured to include a metallic bellows member 74. In the fourth embodiment, the extension device 72 is disposed at a position facing the front wheel (refer to FIG. 1) in the vehicle front-and-rear direction within the closed cross section of the front end portion 18A of the rocker panel 18.

The extension device 72 is configured to include the bellows member 74 as an extending member, an inflator 76, and a load input portion 78. The bellows member 74 is a substantially bellows-shaped member made of a metal and is accommodated in a folded state (a contracted state) within the cross section of the rocker panel 18. A tip portion 74A of the bellows member 74 is mounted on the load input portion 78 (described later), and a base end portion 74B of the bellows member 74 is fixed to the base portion 18B of the rocker panel 18.

The inflator 76 is provided at the base portion 18B of the rocker panel 18. The inflator 76 is provided with a gas generation part (not shown) and is configured such that the inflator 76 operates to supply gas from the inflator 76 to an internal space 80 of the bellows member 74. The inflator 76 is electrically connected to the ECU 36.

The load input portion 78 is fixed to the tip portion 74A of the bellows member 74, and the load input portion 78 is a substantially flat plate-shaped metal member having a thickness direction in the vehicle front-and-rear direction. The load input portion 78 is formed slightly smaller than the rocker panel 18, and the load input portion 78 is inserted into the front end portion 18A of the rocker panel 18. That is, the load input portion 78 also functions as a cover for closing the opening portion of the rocker panel 18.

As shown in FIG. 8B, when the inflator 76 operates based on the signal from the ECU 36, gas is supplied to the internal space 80 of the bellows member 74, and thus the bellows member 74 is extended (inflated) toward the vehicle front side. In this way, the load input portion 78 moves toward the vehicle front side. At this time, the base end portion (one end portion) 74B of the bellows member 74 is maintained in a state of being disposed within the cross section of the rocker panel 18.

In the extended state, the base end portion 74B of the bellows member 74 is configured so as to be located inside the outer shape of the rocker panel 18 when viewed from the vehicle front-and-rear direction. In the extended state, the load input portion 78 is formed larger than the tip portion 74A of the bellows member 74 when viewed from the vehicle front-and-rear direction.

### Operation and Effects

The operation and effects of the fourth embodiment will be described.

In the load transmission structure of the fourth embodiment, as shown in FIG. 8A, the metallic bellows member 74 is accommodated in the cross section of the rocker panel 18 in a state before being extended, and therefore, it is possible to further suppress a decrease in a design characteristic. The bellows member 74 can be accommodated in a folded state, and therefore, a space for accommodation is not increased. That is, it is possible to save space while further suppressing a decrease in a design characteristic. The other operations are the same as those in the other embodiments.

The load transmission structures according to the embodiments have been described above. However, it is obvious that the invention can be implemented in various aspects within a scope that does not depart from the gist of the invention. For example, in the embodiments described above, the extension device is provided at the front end portion 18A of the rocker panel 18. However, there is no limitation thereto, and a structure in which an extension device is provided at a rear end portion of the rocker panel 18 may be adopted. In this case, an extending member is extended toward a rear wheel (a wheel) from the rear end portion of the rocker panel 18. In this way, it is possible to effectively transmit a collision load input to the rear wheel at the time of a rear collision to the rocker panel.

In the embodiments described above, the micro gas generator or the inflator is adopted as means for extending the extending member such as the rod or the bellows member. However, there is no limitation thereto. For example, an electric actuator or the like may be used as long as it is possible to extend the extending member to the wheel at the time of a collision of the vehicle.

## Claims

1. A load transmission structure comprising:
a rocker panel (18) disposed to extend in a vehicle front-and-rear direction at an end portion of a vehicle in a width direction of the vehicle;
an extension device (24) provided with an extending member (34) disposed at an end portion of the rocker panel (18) in the vehicle front-and-rear direction, the end portion of the rocker panel (18) facing a wheel, the extension device (24) being configured to operate to extend the extending member (34) toward the wheel (20) from the rocker panel (18); and
a controller (36) configured to operate the extension device (24) when a collision of the vehicle (10) is detected or predicted,
wherein the extending member (34) is configured to include a metallic rod having an axis which extends in the vehicle front-and-rear direction.

2. The load transmission structure according to claim 1, wherein:
the extension device (24) has a load input portion (28B) disposed at a tip portion of the extending member (34) when the extending member is in an extended state; and
the load input portion (28B) has a thickness in the vehicle front-and-rear direction and has a diameter larger than a diameter of the tip portion of the extending member (34), the load input portion (28B) being made of a metal.

3. The load transmission structure according to claim 2, wherein the extension device (24) has an impact absorbing member (42) mounted on a front face of the load input portion (28B) in the vehicle front-and-rear direction.

4. The load transmission structure according to any one of claims 1 to 3, wherein:
the extending member (34) has a base end portion (32A) connected to the rocker panel (18); and
the base end portion (32A) is located inside an outer shape of the rocker panel (18) when viewed in the vehicle front-and-rear direction when the extending member (34) is in an extended state.

5. The load transmission structure according to claim 1, wherein:
the extension device (24) is configured to include a case (26), a cover (28), and an actuator (30);
the case (26) is mounted on a front face of the end portion of the rocker panel (18) in the vehicle front-and-rear direction and has an opening portion (26A) on a front side of the case (26);
the cover (28) is disposed so as to close the opening portion (26A) of the case (26) and slide with respect to the case (26); and
the actuator (30) is composed of the extending member (34) and a main body part (32) and is accommodated in the case (26) such that the actuator (30) operates to extend the extending member (34) and the extending member (34) pushes the cover (28) toward the wheel (20) to slide the cover (28) with respect to the case (26).

6. A load transmission structure comprising:
a rocker panel (18) disposed to extend in a vehicle front-and-rear direction at an end portion of a vehicle in a width direction of the vehicle;
an extension device (52; 56) provided with an extending member (34; 64, 68) disposed at an end portion of the rocker panel (18) in the vehicle front-and-rear direction, the end portion of the rocker panel (18) facing a wheel and the extension device having a first end portion disposed within the rocker panel (18) and a second end portion extending in the vehicle front-and-rear direction, the extension device (52; 56) being configured to operate to extend the extending member (34; 64, 68) toward the wheel (20) from the rocker panel (18); and
a controller (36) that operates the extension device (52; 56) when a collision of the vehicle (10) is detected or predicted.

7. The load transmission structure according to claim 6, wherein:
the extending member (34; 64, 68) is configured to include a metallic rod accommodated in the rocker panel (18) in a state before the metallic rod is extended; and
the rod is extended in the vehicle front-and-rear direction by an operation of the extension device (52; 56).

8. The load transmission structure according to claim 6, wherein:
the extending member is a metallic bellows member (74) folded and accommodated in the rocker panel (18) in a state before the metallic bellows member (74) is extended; and
the extension device (72) operates to supply gas to an interior of the bellows member (74) and extend the bellows member (74) in the vehicle front-and-rear direction.

9. The load transmission structure according to any one of claims 6 to 8, wherein:
the extension device (52; 56) has a load input portion (54B; 70) disposed at a tip portion of the extending member (34; 64, 68) when the extension device is in an extended state; and
the load input portion (54B; 70) has a thickness in the vehicle front-and-rear direction and has a diameter larger than a diameter of the tip portion of the extending member (34; 64, 68), and the load input portion (54B; 70) is made of a metal.

10. The load transmission structure according to claim 9, wherein the extension device (52; 56) has an impact absorbing member (42) mounted on a front face of the load input portion (54B; 70) in the vehicle front-and-rear direction.

11. The load transmission structure according to any one of claims 6 to 10, wherein:
the extending member (34; 64, 68) has a base end portion (32A; 62A, 66A) connected to the rocker panel (18); and
the base end portion (32A; 62A, 66A) is located inside an outer shape of the rocker panel (18) when viewed in the vehicle front-and-rear direction when the extending member is in an extended state.
